# EUROPÄISCHE PATENTSCHRIFT

(11) **EP 0 538 549 B1**
(45) Veröffentlichungstag und Bekanntmachung des Hinweises auf die Patenterteilung: **09.11.1994**
(21) Anmeldenummer: 92108046.1
(22) Anmeldetag: 13.05.1992
(51) Int. Cl.: B23Q 11/08, F16B 31/04, F16B 5/02

(54) **Abdeckvorrichtung**
Covering device
Dispositif de couverture

(30) Priorität: 23.10.1991 DE 4134937
(43) Veröffentlichungstag der Anmeldung: 28.04.1993
(73) Patentinhaber: Firma Carl Freudenberg, 69469 Weinheim (DE)
(72) Erfinder: Triesethau, Karl-Heinz, W-6101 Brensbach (DE)

(56) Entgegenhaltungen:
- DE-A- 1 400 872
- DE-C- 1 051 158
- US-A- 2 401 056
- US-A- 4 545 270
- US-A- 4 958 970

## Beschreibung

Die Erfindung betrifft eine Abdeckvorrichtung, umfassend eine Abdeckkappe aus elastisch nachgiebigem Material mit zumindest einer Ausnehmung, die während der bestimmungsgemäßen Verwendung von einem Befestigungselement durchdrungen ist, wobei die Ausnehmung von einem tellerfederartigen Bereich umschlossen ist und wobei der Bereich einstückig mit der Abdeckkappe ausgebildet ist.

Eine solche Abdeckvorrichtung ist aus der DE-C-1 051 158 bekannt. Die Abdeckvorrichtung ist als lockerungssichere Befestigung von Baubeschlägen, insbesondere von Türschildern vorgesehen, wobei die Abdeckkappe zum Durchstecken des Befestigungsselements kreuz- oder sternförmig geschlitzt ist, so daß sich bei der Befestigung die zwischen den Schlitzen befindlichen Zungen federnd einbiegen und durch ihre Federspannung eine Sicherung gegen eine Lockerung des Befestigungselements und einen Erhalt der erforderlichen Schraubenklemmkraft gewährleisten.

Der Erfindung liegt die Aufgabe zugrunde, eine Abdeckvorrichtung der eingangs genannten Art derart weiterzuentwickeln, daß Oberflächenbeschädigungen der Abdeckvorrichtung vermieden werden.

Diese Aufgabe wird erfindungsgemäß mit dem kennzeichnenden Merkmalen von Anspruch 1 gelöst. Auf vorteilhafte Ausgestaltungen nehmen die Unteransprüche Bezug.

Bei der erfindungsgemäßen Abdeckvorrichtung ist es vorgesehen, daß der tellerfederartige Bereich zumindest zwei einander konzentrisch umschließende, hohlkegelförmige und einstückig miteinander ausgebildete Scheibenbereiche aufweist und daß der in radialer Richtung außen angeordnete Scheibenbereich mit einer quer zur Achse der Ausnehmung gedachten Ebene einen ersten Kegelwinkel einschließt, der kleiner ist, als ein zweiter Kegelwinkel, den der in radialer Richtung innere Scheibenbereich mit der Ebene begrenzt. Insbesondere bei hochbelasteten Schraubenverbindungen ist eine derartige Ausgestaltung von großem Vorteil. Weitere Vorteile bezüglich der Gebrauchseigenschaften ergeben sich, wenn im Übergangsbereich zwischen den beiden Scheibenbereichen auf der dem abzudeckenden Baute abgewandten Oberfläche zumindest eine konzentrisch umlaufende Nut angeordnet ist und wenn der innere Scheibenbereich im unmontierten Zustand eine Oberfläche aufweist, die von dem zur Anwendung gelangenden Befestigungselement vollständig berührbar ist. Die Federkennlinie des tellerfederartigen Bereiches kann genau vorherbestimmt werden und die Oberflächenbeschichtung kann besonders einfach, in einem genau definierten Bereich auf die Abdeckkappe aufgebracht werden. An der in radialer Richtung innenliegende Kante der Nut kann beispielsweise die polymere Oberflächenbeschichtung abgedrückt werden. Eine Nachbehandlung im Oberflächenbereich, der mit dem Befestigungselement in Berührung gelangt, ist dadurch entbehrlich.

Bei der erfindungsgemäßen Abdeckvorrichtung ist die Ausnehmung von einem tellerfederartigen Bereich umschlossen und der Bereich ist einstückig mit der Abdeckkappe ausgebildet. Hierbei ist von Vorteil, daß die Montage der Abdeckvorrichtung besonders einfach ist und Federringe, Unterlegscheiben oder teure Spezialschrauben nicht zur Anwendung gelangen. Die zuverlässige, sichere Befestigung der Abdeckvorrichtung an dem abzudeckenden Bauteil wird durch den tellerfederartigen Bereich gewährleistet, der für die erforderliche Schraubenklemmkraft während der gesamten Gebrauchsdauer der Abdeckkappe sorgt. In Abhängigkeit von den jeweiligen Gegebenheiten des Anwendungsfalles können beispielsweise metallische Werkstoffe verwendet werden, die durch Tiefziehen in die gewünscht Form gebracht werden. Relaxationserscheinungen bei Verwendung metallischer Werkstoffe sind vernachlässigbar gering.

Die Abdeckvorrichtung kann beispielsweise auch als Lagerarm einer Motoraufhängung ausgebildet sein. Zur bestimmungsgemäßen Verwendung des Motorlagers kann die Abdeckvorrichtung in Form eines Lagerarmes beispielsweise an der Karosserie und/oder dem Chassis eine Kraftfahrzeuges befestigt werden.

Die Abdeckkappe kann zumindest teilweise eine korrossionsbeständige Oberfläche aufweisen. Gemäß einer vorteilhaften Ausgestaltung ist es vorgesehen, daß nur die einem abzudeckenden Bauteil abgewandte Oberfläche nur in den von dem Befestigungselement unberührten Teilbereichen mit einer Oberflächenbeschichtung aus polymerem Werkstoff versehen sein kann. Hierbei ist von Vorteil, daß der metallische Werkstoff der Abdeckvorrichtung gegen Umwelteinflüsse, wie beispielsweise Feuchtigkeit, nicht resistent sein muß, sondern nur Federeigenschaften aufzuweisen braucht, die gute Gebrauchseigenschaften während einer langen Gebrauchsdauer sicherstellen. Diese Ausgestaltung bedingt eine wirtschaftliche Herstellbarkeit der Abdeckvorrichtung, weil als Trägermaterial ein vergleichsweise kostengünstiger Werkstoff gewählt werden kann. Den Schutz der Abdeckvorrichtung gegen äußere Einflüsse übernimmt die Oberflächenbeschichtung auf den Teilbereichen der Oberfläche, die von einem zur Anwendung gelangenden Verbindungselement unberührt bleiben. Daraus ergibt sich, daß auch die Umfangsflächen der Abdeckvorrichtung beschichtet sein können, wobei die Beschichtung zweckmäßigerweise einstückig ineinander übergehend ausgebildet ist. Diese Ausgestaltung bewirkt eine zuverlässige Festlegung der Abdeckvorrichtung durch das Befestigungselement, da genau die Bereiche der Oberfläche, die beispielsweise von einem Schraubenkopf berührt werden, nicht mit einer Oberflächenbeschichtung versehen sind. Relaxationserscheinungen treten dadurch nicht auf. Die vom Befestigungselement unbedeckten Teilbereiche der Oberfläche sind gegen äußere Einflüsse durch die Oberflächenbeschichtung geschützt.

Die Oberflächenbeschichtung kann beispielsweise durch Gummi gebildet sein. Die Oberflächenbeschichtung aus Gummi schützt die Oberfläche der Tellerspannscheibe einerseits dauerhaft vor mechanischen Beschädigungen, wie beispielsweise Steinschlag und andererseits vor Umwelteinflüssen, wie beispielsweise Feuchtigkeit. Der Werkstoff der Oberflächenbeschichtung ist in Abhängigkeit von den besonderen Erfordernissen des Anwendungsfalles jeweils zweckmäßig auszuwählen. Insbesondere bei Ausgestaltung der Abdeckvorrichtung als Lagerarm für die Aufnahme eines Motorlagers ist von Vorteil, wenn die Oberflächenbeschichtung aus Gummi besteht. Die Oberflächenbeschichtung und ein zur Schwingungsdämpfung/Schwingungsisolierung vorgesehenes Federelement aus elastisch nachgiebigem Werkstoff können beispielsweise einstückig ineinander übergehend ausgebildet sein, was die Befestigung, die Herstellbarkeit und die Dauerhaltbarkeit eines mit der Abdeckvorrichtung versehenen Motorlagers günstig beeinflußt.

Zur Funktion der Abdeckvorrichtung wird folgendes ausgeführt: Bei Belastung des tellerfederartigen Bereichs auf Druck in Richtung der Längsachse gelangt zunächst der äußere Scheibenbereich, der eine geringere Federsteifigkeit als der innere Scheibenbereich aufweist, zur Anlage mit der Gegenfläche, beispielsweise einem Maschinengehäuse. Bei weiterer Belastung des tellerfederartigen Bereichs in Richtung der Längsachse wird dann der innere Scheibenbereich auf die Gegenfläche gepreßt, so daß der gesamte tellerfederartige Bereich die Gegenfläche aufliegend berührt. Zur Vermeidung von Relaxationserscheinungen ist die Oberflächenbeschichtung nur auf den Teilbereich der Abdeckkappe angebracht, die von dem zur Anwendung gelangenden Verbindungselement nicht berührt werden. Eine ausgezeichnet dauerhafte Verbindung der miteinander verbundenen Maschinenelemente ist dadurch gewährleistet. Die Oberflächenbereiche außerhalb der Kontaktstellen zwischen Befestigungselement und Gegenfläche sind auf der dem abzudichtenden Bauteil abgewandten Seite mit einer Oberflächenbeschichtung zum Schutz des metallischen Abdeckkappenwerkstoffs versehen.

Die Oberflächenbeschichtung kann die Nut dichtend überdecken. Dadurch ist gewährleistet, daß die Nut nicht durch Verunreinigungen ausgefüllt ist, die die Gebrauchseigenschaften des tellerfederartigen Bereiches, auch langfristig, beeinträchtigen könnten. Korrossion speziell in diesem Bereich wird durch diese Ausgestaltung wirkungsvoll verhindert.

Eine beispielhafte Ausgestaltung einer Abdeckvorrichtung wird nachfolgend anhand der Zeichnungen weiter erläutert. Es zeigen in schematischer Darstellung:
Figur 1 einen Ausschnitt aus einer Abdeckvorrichtung mit Oberflächenbeschichtung aus polymerem Werkstoff in einem Schnitt,

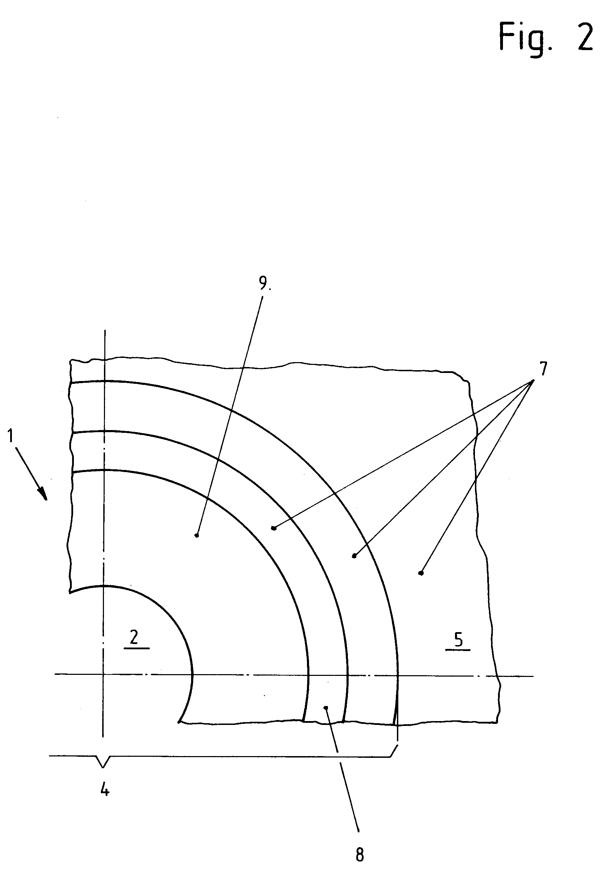

Figur 2 einen Auschnitt der Abdeckvorrichtung gemäß Figur 1 in einer Draufsicht und
Figur 3 drei verschiedene Belastungsszustände des tellerfederartigen Bereiches bei einer Befestigung der Abdeckkappe mit einem Befestigungselement,
Figur 4 die erfindungsgemäße Abdeckvorrichtung als Lagerarm zur Aufnahme eines Motorlagers gestaltet.

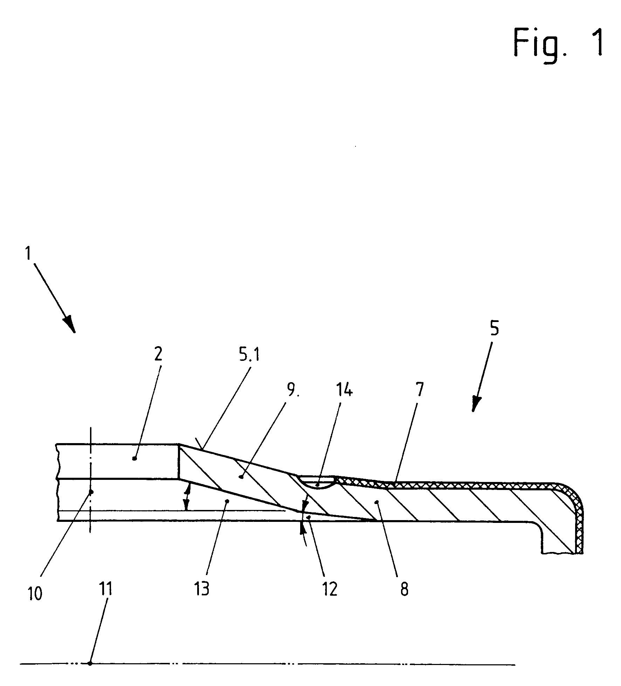

In Figur 1 ist eine Abdeckvorrichtung als Einzelteil dargestellt, die eine Abdeckkappe 1 aus elastisch nachgiebigem Material umfaßt und eine Ausnehmung 2 aufweist, die von einem tellerfederartigen Bereich 4 umschlossen ist, der einstückig mit der Abdeckkappe 1 ausgebildet ist. Der tellerfederartige Bereich besteht im wesentlichen aus zwei einander konzentrisch umschließende, hohlkegelförmige und einstück miteinander ausgebildeten Scheibenbereichen 8, 9 wobei der äußere Scheibenbereich 8 eine geringere Federsteifigkeit aufweist, als der innere Scheibenbereich 9 und mit einer gedachten Ebene 11 einen ersten Kegelwinkel 12 einschließt, der geringer ist, als ein zweiter Kegelwinkel 13, den der innere Scheibenbereich 9 mit dieser Ebene 11 einschließt. Durch diese Ausgestaltung ist
bedingt, daß bei Belastung des tellerfederartigen Bereiches auf Druck in Richtung der Achse 10 zunächst der äußere Scheibenbereich 8 mit der Gegenfläche vollständig zur Anlage gelangt und dann, bei weiter ansteigender Federkraft, der innere Scheibenkörper 9. Der äußere 8 und der innere Scheibenkörper 9 sind mit einer Nut 14 im Bereich der Übergangszone voneinander getrennt, die die vorteilhaften Gebrauchseigenschaften der Abdeckvorrichtung begünstigt. In dem hier dargestellten Beispiel ist im Bereich der Oberfläche 5 eine Oberflächenbeschichtung 7 aus polymerem Werkstoff im Bereich des äußeren Scheibenbereiches 8 aufgebracht, der auch die Nut in radialer Richtung vollständig überdeckt. Auch die äußeren Umfangsflächen der Abdeckvorrichtung sind durch die Oberflächenbeschichtung 7 geschützt. Im Rahmen der vorliegenden Erfindung ist es vorgesehen, daß ein zur Anwendung gelangendes Befestigungselement, beispielsweise eine Schraube, eine Kontaktfläche zu dem tellerfederartigen Bereich aufweist, die genauso groß ist, wie der nichtbeschichtete Oberflächenbereich des inneren Scheibenbereiches 9.

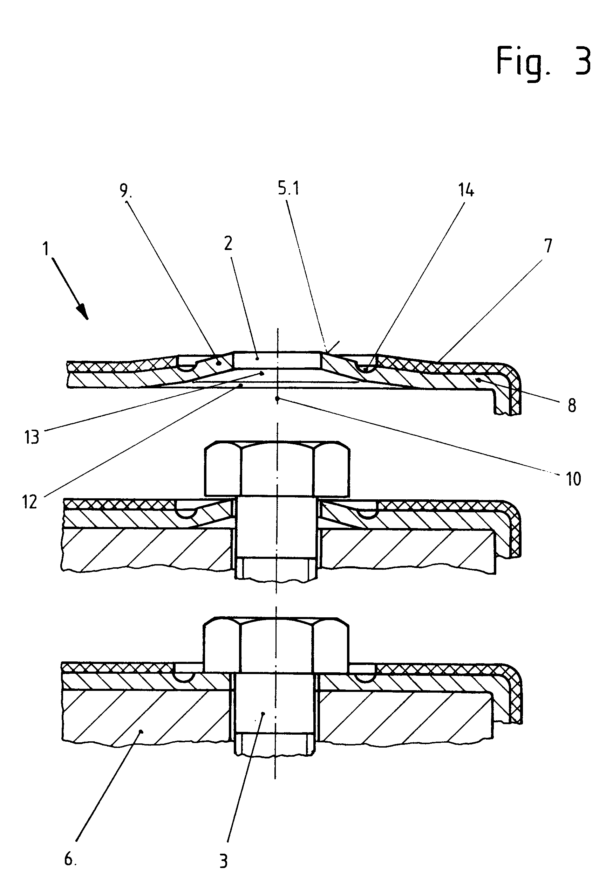

In Figur 3 ist die erfindungsgemäße Abdeckvorrichtung während der Montage an einem abzudeckenden Bauteil 6 dargestellt. Es ist deutlich zu erkennen, daß sich zunächst der äußere Scheibenbereich 8 im Bereich der Gegenfläche des abzudeckenden Bauteiles 6 an dieses anlegt, anschließend die Federkraft durch die größere Federsteifigkeit des inneren Scheibenbereiches 9 erhöht wird und dieser im montierten Zustand ebenfalls flächig auf der Gegenfläche aufliegt. Die zur sicheren Schraubenverbindung erforderliche Vorspannkraft bleibt während der gesamten Gebrauchsdauer der kraftschlüssigen Verbindung erhalten und wird durch die Verwendung einer Oberflächenbeschichtung aus polymerem Werkstoff auch nicht durch negative äußere Einflüsse auf das beispielsweise metallische Grundmaterial der Abdeckvorrichtung verkürzt.

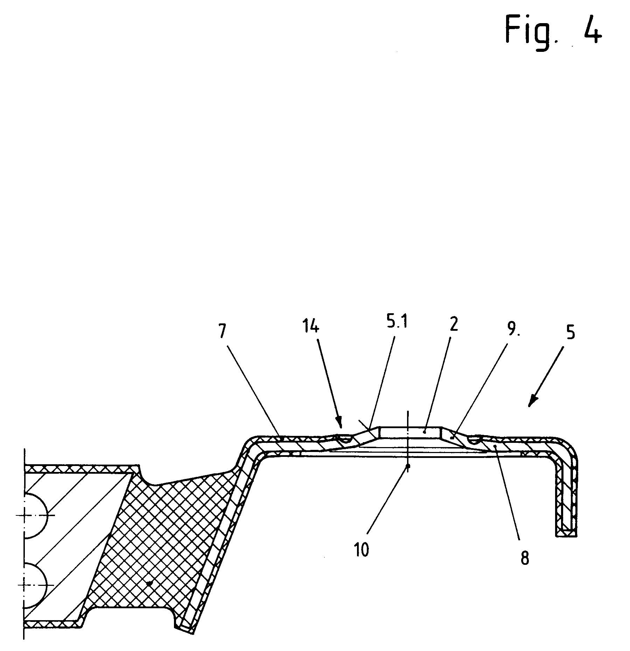

In Figur 4 ist die erfindungsgemäße Abdeckvorrichtung als Lagerarm zur Aufnahme eines Motorlagers ausgeführt. Die Oberflächenbeschichtung 7 aus polymerem Werkstoff ist einstückig ineinander übergehend mit einem zur Anwendung gelangenden Federelement ausgeführt, das zur Schwingungsisolierung/Schwingungsdämpfung eines angeschlossenen Maschinenelementes vorgesehen ist. Die Herstellbarkeit eines derartig ausgestalteten Lagerarmes sowie der gute Schutz vor äußeren Einflüssen durch die Oberflächenbeschichtung 7 ist von hervorzuhebender Bedeutung.

Die erfindungsgemäße Abdeckvorrichtung kann in den verschiedensten Bereichen der Technik zur Anwendung gelangen und stellt ein preiswert und einfach herzustellendes Maschinenelement dar, das in vielfältigen Bereichen zur Anwendung gelangen kann und neben guten Gebrauchseigenschaften eine gute Gebrauchsdauer aufweist.

## Patentansprüche

1. Abdeckvorrichtung, umfassend eine Abdeckkappe (1) aus elastisch nachgiebigem Material mit zumindest einer Ausnehmung (2), die während der bestimmungsgemäßen Verwendung von einem Befestigungselement (3) durchdrungen ist, wobei die Ausnehmung (2) von einem tellerfederartigen Bereich (4) umschlossen ist und wobei der Bereich (4) einstückig mit der Abdeckkappe (1) ausgebildet ist, dadurch gekennzeichnet, daß der tellerfederartige Bereich (4) zumindest zwei einander konzentrisch umschließende, hohlkegelförmige und einstückig miteinander ausgebildete Scheibenbereiche (8, 9) aufweist und daß der in radialer Richtung außen angeordnete Scheibenbereich (8) mit einer quer zur Achse (10) der Ausnehmung (2) gedachten Ebene (11) einen ersten Kegelwinkel (12) einschließt, der kleiner ist, als ein zweiter Kegelwinkel (13), den der in radialer Richtung innere Scheibenbereich (9) mit der Ebene (11) begrenzt, daß im Übergangsbereich zwischen den beiden Scheibenbereichen (8, 9) auf der dem abzudeckenden Bauteil (6) abgewandten Oberfläche (5.1) zumindest eine konzentrisch umlaufende Nut (14) angeordnet ist und daß der innere Scheibenbereich (9) im montierten Zustand eine Oberfläche aufweist, die von dem zur Anwendung gelangenden Befestigungselement (3) vollständig berührbar ist.

2. Abdeckvorrichtung nach Anspruch 1, dadurch gekennzeichnet, daß die Abdeckkappe (1) zumindest teilweise eine korrossionsbeständige Oberfläche (5) aufweist.

3. Abdeckvorrichtung nach Anspruch 2, dadurch gekennzeichnet, daß nur die einem abzudeckenden Bauteil (6) abge-wandte Oberfläche (5.1) nur in den von dem Befestigungselement (3) unberührten Teilbereichen mit einer Oberflächenbeschichtung (7) aus polymerem Werkstoff versehen ist.

4. Abdeckvorrichtung nach Anspruch 3, dadurch gekennzeichnet, daß die Oberflächenbeschichtung (7) aus Gummi besteht.

5. Abdeckvorrichtung nach Anspruch 1 bis 4, dadurch gekennzeichnet, daß die Oberflächenbeschichtung (7) die Nut (14) dichtend überdeckt.

## Claims

1. A covering device comprising a cover cap (1) of elastically compliant material with at least one opening (2) which, during the intended use, is penetrated by a fastening element (3), the opening (2) being surrounded by a disc spring-like region (4) and the region (4) being designed so as to be integral with the cover cap (1), characterized in that the disc spring-like region (4) has at least two hollow-conical disc regions (8, 9) which enclose one another concentrically and are designed so as to be integral with one another, and in that the disc region (8) arranged outwardly in the radial direction, together with an imaginary plane (11) transverse to the axis (10) of the opening (2), encloses a first conical angle (12) which is smaller than a second conical angle (13) delimited by the inner disc region (9), in the radial direction, with the plane (11), in that at least one concentrically surrounding groove (14) is arranged in the transition region between the two disc regions (8, 9) on the surface (5.1) facing away from the component (6) to be covered and in that, in the fitted state, the inner disc region (9) has a surface which can be completely contacted by the fastening element (3) being used.

2. A covering device according to claim 1, characterized in that the cover cap (1) has at least partially a corrosion-resistant surface (5).

3. A covering device according to claim 2, characterized in that only the surface (5.1) facing away from a component (6) to be covered is provided, only in the subregions not contacted by the fastening element (3), with a surface coating (7) of polymeric material.

4. A covering device according to claim 3, characterized in that the surface coating (7) is composed of rubber.

5. A covering device according to any of claims 1 to 4, characterized in that the surface coating (7) sealingly covers the groove (14).

## Revendications

1. Dispositif de couverture, comprenant une chape (1) faite d'un matériau élastiquement flexible et pourvue d'au moins un trou (2) qui est traversé par un élément de fixation (3) pendant l'utilisation conforme aux prescriptions, le trou (2) étant entouré par une région (4) semblable à une rondelle conique et la région (4) étant réalisée d'une seule pièce avec la chape (1), caractérisé en ce que la région (4) semblable à une rondelle conique comporte au moins deux zones circulaires (8, 9) en forme de cône creux, formées d'une seule et même pièce et dont l'une entoure l'autre de manière concentrique, et en ce que la zone circulaire (8) située à l'extérieur dans le sens radial définit, avec un plan (11) imaginaire perpendiculaire à l'axe (10) du trou (2), un premier angle de cône (12) qui est plus petit qu'un deuxième angle de cône (13) défini par la zone circulaire (9) située à l'intérieur dans le sens radial et par le plan (11), et en ce qu'au moins une gorge (14) s'étendant de manière concentrique est située dans la zone de passage entre les deux zones circulaires (8, 9), sur la surface (5.1) détournée de l'élément de construction (6) à couvrir, et en ce que la zone circulaire interne (9) présente, dans l'état monté, une surface qui peut être mise totalement en contact avec l'élément de fixation (3) que l'on utilisera.

2. Dispositif de couverture selon la revendication 1, caractérisé en ce que la chape (1) est pourvue, au moins en partie, d'une surface (5) résistant à la corrosion.

3. Dispositif de couverture selon la revendication 2, caractérisé en ce que seule la surface (5.1) détournée d'un élément de construction (6) à couvrir est pourvue d'un revêtement superficiel (7) en matériau polymère, uniquement dans les parties qui ne sont pas mises en contact avec l'élément de fixation (3).

4. Dispositif de couverture selon la revendication 3, caractérisé en ce que le revêtement superficiel (7) est en caoutchouc.

5. Dispositif de couverture selon les revendications 1 à 4, caractérisé en ce que le revêtement superficiel (7) recouvre la gorge (14) de manière étanche.
